# EUROPEAN PATENT APPLICATION

(11) **EP 2 648 084 A1**
(43) Date of publication of application: **09.10.2013**
(21) Application number: 12163329.1
(22) Date of filing: 05.04.2012
(51) Int. Cl.: G06F 3/048, G06T 11/20, G06F 3/041, G06K 9/22

(54) **Electronic device and method of controlling display of information on a touch-sensitive display**

(71) Applicant: BlackBerry Limited, Waterloo ON N2L 3W8 (CA)
(72) Inventor: Parekh, Premal Vinodchandra, Waterloo Ontario N2L 3W8 (CA); Singh, Amit Pal, Waterloo Ontario N2L 3W8 (CA); Robinson, James Alexander, Waterloo Ontario N2L 3W8 (CA)
(74) Representative: Bryn-Jacobsen, Caelia

(57) **Abstract**

A method includes detecting a touch on a touch-sensitive display of an electronic device, displaying information on the touch-sensitive display utilizing touch data of the detected touch, filtering the touch data to produce filtered data, and updating the information displayed based on the filtered data.

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

### SUMMARY

A method includes detecting a touch on a touch-sensitive display of an electronic device, displaying information on the touch-sensitive display utilizing touch data of the detected touch, filtering the touch data to produce filtered data, and updating the information displayed based on the filtered data. An electronic device includes a touch-sensitive display comprising a display and touch sensors coupled to a touch controller and configured to detect a touch and to display information utilizing touch data of the detected touch, and a processor coupled to the touch controller and to the display and configured to filter the touch data to produce filtered data and update the information displayed based on the filtered data.

### BRIEF DESCRIPTION OF THE DRAWINGS

FIG. 1 is a block diagram of a portable electronic device in accordance with the disclosure.

FIG. 2 is a flowchart illustrating an example of a method of displaying information in accordance with the disclosure.

FIG. 3 through FIG. 6 illustrate an example of a touch on a touch-sensitive display of an electronic device in accordance with the disclosure.

### DETAILED DESCRIPTION

The following describes an electronic device and method including detecting a touch on a touch-sensitive display of an electronic device, displaying information on the touch-sensitive display utilizing touch data of the detected touch, filtering the touch data to produce filtered data, for example, at a processor, and updating the information displayed based on the filtered data.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

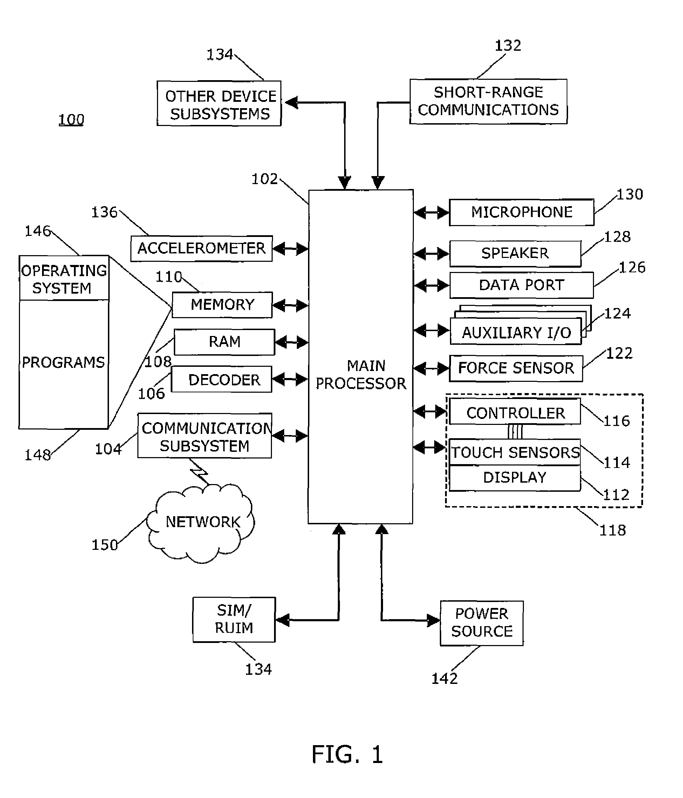

A block diagram of an example of a portable electronic device 100 is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. Optionally, the processor may interact with one or more force sensors 122. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus (active or passive), pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determine or react to forces applied to the touch-sensitive display 118. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

When a touch-sensitive display is utilized to draw a virtual element or object in response to receipt of touch data, a noticeable delay, or latency, exists between the time that touch contact is made and the time that the element or part of the element is drawn on the display. Thus, the drawing as displayed appears to lag behind the touch. This delay may be more noticeable when a stylus is utilized because the spacing between the location of the stylus on the display and the line that is drawn is noticeable.

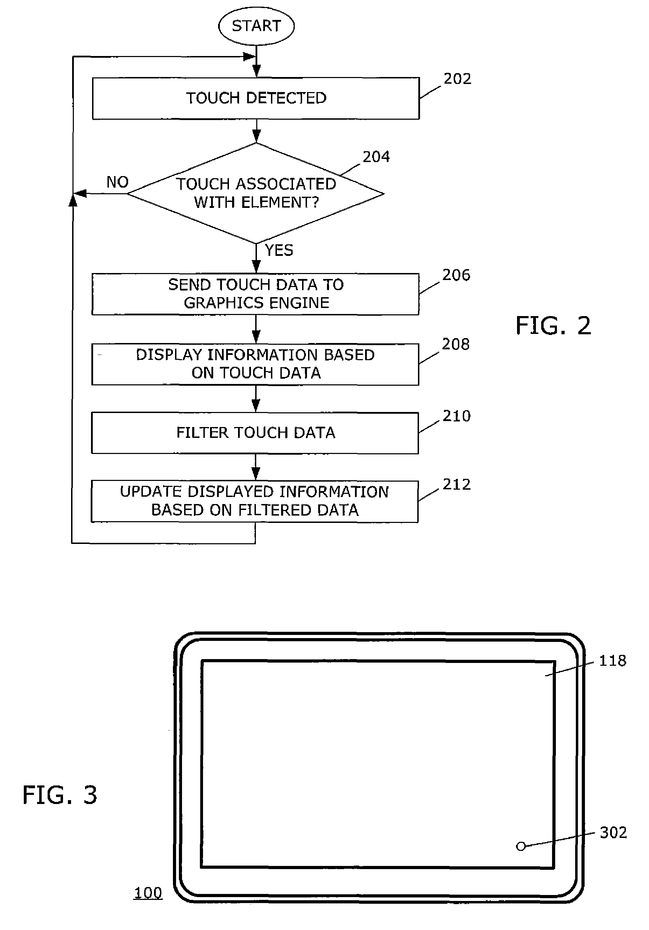

A flowchart illustrating an example of a method of controlling a touch-sensitive display is shown in FIG. 2. The method may be performed by software executed, for example, by the touch controller 116 and/or the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable storage medium, which medium is tangible.

A touch or an ongoing touch is typically detected 202 when touch data from the controller 116 is received by the processor 102. The touch data includes coordinates of the touch and an identification of the time that the touch is detected at the coordinate location. The touch data is received by the operating system, for example, by the touch driver.

When the touch data is associated 204 with an element that is drawn on the touch-sensitive display 118, the process continues at 206. For example, the touch data may be associated with a virtual element or object, such as a line, that is drawn or rendered on the touch-sensitive display 118 in response to receipt of touch data by the processor 102. The OS of the processor determines that the touch location is associated with an area in which an element is drawn, such as a canvas area. The canvas area may be an area identified by an application running on the electronic device 100.

The touch data is sent 206 to a graphics rendering engine that is coupled to or integrated with a display frame buffer. The graphics rendering engine passes the touch data to the display frame buffer to display 208 information associated with the touch data. The graphics rendering engine and the display frame buffer are coupled to the display 112 such that the processor 102 communicates with the display 112 via the graphics rendering engine and display frame buffer. The information displayed may be any suitable information associated with the element. For example, when touch data received by the processor 102 is utilized to draw an element such as a line on the touch-sensitive display 118, the information displayed may be a part of the line such that the line is extended to the coordinates of the touch received from the controller 116.

The touch data is also filtered 210 by the touch driver of the OS of the processor 102. The touch data is filtered, for example, to filter noise, to smooth out animation or movement of information such as described above, to smooth out a line, to determine whether or not to utilize the touch data, and so forth. The filtering may be any suitable filtering, such as a Kalman filtering.

The displayed information is updated 212 based on the filtered touch data. The filtered data is passed, through the application, to the graphics rendering engine. The filtered data replaces the unfiltered touch data. When the filtered data differs from the unfiltered touch data, the displayed information is changed, for example, to change the location of an element, to update by redrawing a line on the touch-sensitive display 118, or to update by removing the information displayed. The filtered data may be utilized, for example, to smooth out a line drawn on the touch-sensitive display 118.

An example of a touch on a touch-sensitive display 118 of an electronic device 100 is shown in FIG. 3 through FIG. 6. In this example, an application is running on the portable electronic device 100 and an area of the touch-sensitive display 118 is utilized for drawing a virtual element or object in response to receipt of touch data by the processor. For example, touch data is sent from the controller 116 to the processor when stylus contact with the touch-sensitive display 118 is detected. The area of the touch-sensitive display 118 that is utilized for drawing is identified, by the application, for use in the OS by the processor 102 to determine when a touch is at a location associated with the area.

The touch is detected and the touch is at a location associated with the area that is utilized for drawing. The touch data, including the coordinates of the touch, is sent to the graphics rendering engine and passed to the display frame buffer to display information on the display 112. The location of the touch is illustrated by the circle 302 in FIG. 3. The touch data is also filtered by the processor 102, and the filtered data is utilized to update the touch location to the location illustrated by the circle 402.

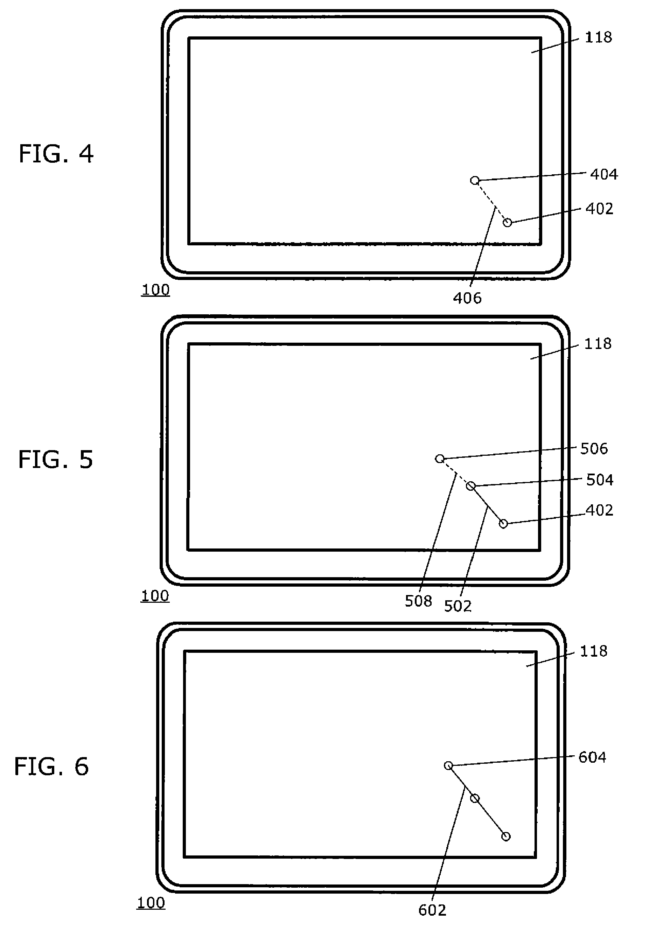

During filtering, the touch moves. The new location is detected, and the touch location is associated with an area that is utilized for drawing. The touch data, including the new coordinates of the touch illustrated by the circle 404, is sent to the graphics rendering engine for display on the touch-sensitive display 118. In the example illustrated in FIG. 3 through FIG. 6, the touch data received by the graphics rendering engine is utilized to draw a line on the touch-sensitive display 118, and a line 406 is displayed from a point associated with the location 402 to a point associated with the location 404. In this example, the line 406 is drawn as a dashed or dotted line and is updated and redrawn as a solid line 502 when the filtered data is received from the processor 102. The touch location is updated to the location illustrated by the circle 504 in FIG. 5.

The touch continues to a further location. The new location is detected and the new location is associated with the area that is utilized for drawing. The touch data, including the new coordinates of the touch illustrated by the circle 506, is sent to the graphics rendering engine. The line 508 is displayed from the point associated with the location 504 to a point associated with the location 506. The dashed line 508 is drawn and is updated and redrawn as a solid line 602 when the filtered data is received from the processor 102 and the touch location is updated to the location illustrated by the circle 604 in FIG. 6.

By sending the touch data directly to the graphics rendering engine, without first filtering, the noticeable delay, also referred to as latency, between the time of a touch or touch movement and the time that information relating to the touch or touch movement is displayed, is reduced. For example, when drawing a line in response to receipt of touch data by the processor, latency causes a delay between the touch and display of the line such that the displayed line appears to lag behind the touch. By sending the raw touch data to the graphics rendering engine, information related to the touch is displayed more quickly and the lag may be less noticeable to the user. The touch data is also filtered by the processor and the displayed information is updated, for example, by replacing the touch data with the filtered data. Accuracy of touch location may be increased by filtering and a smooth response, for example, a smooth line may be displayed.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting a touch on a touch-sensitive display of an electronic device;
displaying information on the touch-sensitive display utilizing touch data of the detected touch;
filtering the touch data to produce filtered data;
updating the information displayed based on the filtered data.

2. The method according to claim 1, wherein displaying information is performed in response to determining that the touch is associated with an identified area of the touch-sensitive display.

3. The method according to claim 1, comprising sending the touch data to a display frame buffer, via a graphics rendering engine, prior to displaying.

4. The method according to claim 1, wherein filtering comprises filtering in an operating system of the processor of the electronic device.

5. The method according to claim 1, wherein displaying information comprises drawing an element on the touch-sensitive display.

6. The method according to claim 1, wherein updating comprises replacing the touch data with the filtered data.

7. The method according to claim 1, wherein updating comprises replacing the information displayed.

8. The method according to claim 1, wherein updating comprises updating when the filtered data differs from the touch data.

9. The method according to claim 1, wherein updating comprises removing at least part of the displayed information.

10. A computer-readable storage medium having computer-readable code executable by at least one processor of a portable electronic device to perform the method according to claim 1.

11. An electronic device comprising:
a touch-sensitive display;
a processor coupled to the touch-sensitive display and configured to perform the method according to any one of claims 1 to 9.

## Amended claims

### Amended claims in accordance with Rule 137(2) EPC.

**1.** A method comprising:
detecting a touch on a touch-sensitive display (118) of an electronic device (100);
displaying information on the touch-sensitive display (118) utilizing touch data of the detected touch;
filtering the touch data to produce filtered data;
updating the information displayed based on the filtered data.

**2.** The method according to claim 1, wherein displaying information is performed in response to determining that the touch is associated with an identified area of the touch-sensitive display (118).

**3.** The method according to claim 1 or 2, comprising sending the touch data to a display frame buffer, via a graphics rendering engine, prior to displaying.

**4.** The method according to any one of claims 1 to 3, wherein filtering comprises filtering in an operating system of a processor (102) of the electronic device (100).

**5.** The method according to any one of claims 1 to 4, wherein displaying information comprises drawing an element on the touch-sensitive display (118).

**6.** The method according to any one of claims 1 to 5, wherein updating comprises replacing the touch data with the filtered data.

**7.** The method according to any one of claims 1 to 5, wherein updating comprises replacing the information displayed.

**8.** The method according to any one of claims 1 to 5, wherein updating comprises updating when the filtered data differs from the touch data.

**9.** The method according to any one of claims 1 to 5, wherein updating comprises removing at least part of the displayed information.

**10.** A computer-readable storage medium having computer-readable code executable by at least one processor (102) of an electronic device (100) to perform the method according to any one of claims 1 to 9.

**11.** An electronic device (100) comprising:
a touch-sensitive display (118);
a processor (102) coupled to the touch-sensitive display (118) and configured to perform the method according to any one of claims 1 to 9.
